# EUROPÄISCHE PATENTSCHRIFT

(11) **EP 0 897 545 B1**
(45) Veröffentlichungstag und Bekanntmachung des Hinweises auf die Patenterteilung: **16.08.2001**
(21) Anmeldenummer: 97922973.9
(22) Anmeldetag: 07.05.1997
(51) Int. Cl.: G01S 13/93, G08G 1/16

(54) **VERFAHREN ZUR ERKENNUNG DES VORAUSLIEGENDEN FAHRBAHNVERLAUFS FÜR KRAFTFAHRZEUGE**
PROCESS FOR DETECTING THE ROAD CONDITIONS AHEAD FOR MOTOR VEHICLES
PROCEDE DE DETERMINATION DE L'ETAT DE LA ROUTE A L'AVANCE POUR VEHICULES A MOTEUR

(30) Priorität: 08.05.1996 DE 19620163
(43) Veröffentlichungstag der Anmeldung: 24.02.1999
(73) Patentinhaber: DaimlerChrysler AG, 70567 Stuttgart (DE)
(72) Erfinder: FECHNER, Thomas, D-13353 Berlin (DE); HACH, Rainer, D-10589 Berlin (DE)
(74) Vertreter: Lindner-Vogt, Karin, Dipl.-Phys.
(86) Internationale Anmeldenummer: EP9702297
(87) Internationale Veröffentlichungsnummer: WO9742521

(56) Entgegenhaltungen:
- US-A- 4 011 563
- US-A- 4 158 841
- US-A- 4 970 653
- US-A- 5 343 206
- PATENT ABSTRACTS OF JAPAN vol. 095, no. 006, 31.Juli 1995 & JP 07 085257 A (HONDA MOTOR CO LTD), 31.März 1995, & US 5 517 412 A (UNOURA) 14.Mai 1996

## Beschreibung

Die Erfindung bezieht sich auf ein Verfahren gemäß dem Oberbegriff des Anspruches 1. Ein solches Verfahren ist aus der US-A-5 343 206 bekannt.

Um die Fahrsicherheit und den Komfort zu erhöhen, werden Kraftfahrzeuge mit Abstandsregelungen zur automatischen Abstandseinhaltung sowie Warnanzeigen für den Fahrer ausgestattet. Es ist bekannt, zu diesem Zweck das Fahrzeug mit Radar- und Bildverarbeitungsgeräten zur Abstandsvermessung auszurüsten. Aus den Meßwerten werden Position und Geschwindigkeit voraus befindlicher Objekte bestimmt und durch automatische Regelung der Geschwindigkeit bzw. Warnung des Fahrers ein Sicherheitsabstand eingehalten. Es ist dadurch möglich, einem auf der eigenen Fahrspur vorausfahrenden Fahrzeug automatisch zu folgen. Erforderlich ist allerdings, daß aus der Vielzahl vorausbefindlicher Objekte stets das für die automatische Abstandsregelung relevante Objekt ermittelt wird. Neben der Positionsbestimmung der erfaßten Objekte ist daher auch die Kenntnis des Fahrbahnverlaufs erforderlich, um zu prüfen, ob sich ein Objekt auf der eigenen Fahrspur befindet. Eine auch nur kurz auftretende Falschzuordnung kann bei geregelter Fahrt zu unnötigen Brems- oder Beschleunigungsmanövern führen, die den Fahrkomfort erheblich einschränken.

Solange die Fahrspur eine konstante Richtung behält, kann zur Fahrspurbestimmung die eigene Fahrzeug-Richtung verwendet werden. Aus der DE 30 34 199 A1 ist bekannt, den aktuellen Fahrzeug-Lenkwinkel zur Erkennung von Kurven auszuwerten. Nachteilig an dieser Methode ist, daß Kurven nicht im Voraus angezeigt werden können, da der Lenkwinkel erst einen gewissen Schwellwert überschreiten muß, was jedoch erst dann eintritt, wenn das Fahrzeug sich bereits in der Kurve befindet. Bei Änderungen der Fahrspurrichtung, wie z.B. bei Kurvenein- und Ausfahrten, wird eine vorausschauende Fahrbahnverlaufserkennung benötigt. Die in der US-A-4 158 841 beschriebene Maßnahme zur Entdeckung von Kurven benutzt vom Lenkwinkel gesteuerte schwenkbare Suchantennen. Diese Lösung ist jedoch mechanisch aufwendig zu realisieren und dementsprechend teuer. Gemäß der DE 44 18 122 A1 wird zusätzlich zur Radarsensorik eine Bildverarbeitungsvorrichtung zur vorausschauenden Kurvenerkennung eingesetzt. In der DE-OS 22 15 576 wird ebenfalls ein bildverarbeitungsbasiertes Verfahren beschrieben, das gekennzeichnet ist durch seine Fähigkeit, auf Kollisionskurs liegende Hindernisse von anderen nicht auf der eigenen Fahrspur befindlichen Objekten zu unterscheiden. Dazu wird die relativ zum Fahrzeug auftretende Bewegung von Bildstrukturen ausgewertet. Nicht auf Kollisionskurs liegende Objekte werden durch ihre Seitenbewegung von Kollisionsobjekten unterschieden, deren Bildstruktur seitenbewegungsfrei Fahrbahnverläufe erkennen. Das Problem der Kurveneinfahrt kann mit dieser Vorrichtung jedoch nicht gelöst werden, da die zur Erkennung erforderliche seitliche Bewegung erst dann einsetzt, wenn sich symmetrisch wächst. Mit dieser Vorrichtung lassen sich prinzipiell Straßenränder und damit das Fahrzeug bereits in der Kurve befindet. Der allgemeine Nachteil von bildverarbeitenden Systemen (sowohl optisch als auch thermo-optisch) gegenüber Radarsystemen besteht in dem erhöhten Aufwand für die Sensorik aufgrund der in der Natur auftretenden extremen Beleuchungsdynamik, der geringen Durchdringungstiefe bei Nebel und der Gefahr von Verschmutzung der Sensorik durch Straßendreck.

Die eingangs genannte US-A-5 343 206 beschreibt ein Verfahren zur Kollisionsvermeidung zwischen einem Fahrzeug und auf der Fahrspur befindlichen Hindernissen. Die Schätzung des eigenen Fahrbahnverlaufs wird hier folgendermaßen realisiert: Mittels Radar wird in einem Winkel von 40° die vorausliegende Umgebung sektorenweise abgetastet und alle reflektierten Ziele entsprechend der gemessenen Entfernung und des Abtastwinkels in eine als Karte bezeichnete Speichermatrix eingetragen. Im nächsten Schritt wird versucht, durch Angleichung eines mathematischen Straßenverlaufsmodells an alle in der Karte eingetragenen Ziele, die optimalen Parameter des Straßenverlaufs zu ermitteln.

Der Erfindung liegt die Aufgabe zugrunde, das eingangs angegebene Verfahren derart auszugestalten, daß eine vorausschauende Fahrbahnverlaufserkennung durch eine spezielle Auswertung der vorhandenen Positions- und Geschwindigkeits-Meßdaten bei ausschließlicher Verwendung von RadarSensorik mit starr ausgerichteten Suchantennen ohne zusätzliche optische Sensorik möglich wird. Dabei soll es möglich sein, eine vorhandene Fahrzeugrichtungsinformation zur Korrektur heranzuziehen.

Diese Aufgabe wird gemäß der Erfindung durch die im Anspruch 1 gekennzeichneten Merkmale gelöst.

Vorteilhafte Aus- und Weiterbildungen des Verfahrens nach der Erfindung sind in den übrigen Ansprüchen gekennzeichnet.

Die Erfindung soll im folgenden anhand von in der Zeichnung dargestellten Ausführungsbeispielen gekennzeichnet werden. Es zeigen:
Fig. 1 typische Zielverfolgungs-Situationen (Gerade. Kurveneinfahrt)
Fig. 2 ein prinzipielles Blockschaltbild für eine Fahrbahnverlaufsvorhersage,
Fig. 3 die Reflexion eines Suchstrahls auf einer glatten Fahrbahn
Fig. 4 die Reflexion eines Suchstrahls am Fahrbahnrand
Fig. 5 Festziele in einem Suchstrahl
Fig. 6 potentielle Fahrbahnranddistanzen nach der Bearbeitung mittels eines Ordnungsfilters
Fig. 7 eine Anordnung zur Fahrbahnrandfilterung
Fig. 8 das Blockbild eines Fahrbahnkrümmungsschätzers.
Fig. 9 ein Beispiel für eine Geradenregression mit 3 Stützwerten
Fig. 10 ein Beispiel für eine Geradenregression mit einer vom Kurvenklassifikator gesteuerten Auswahl von 2 aus 3 Stützwerten

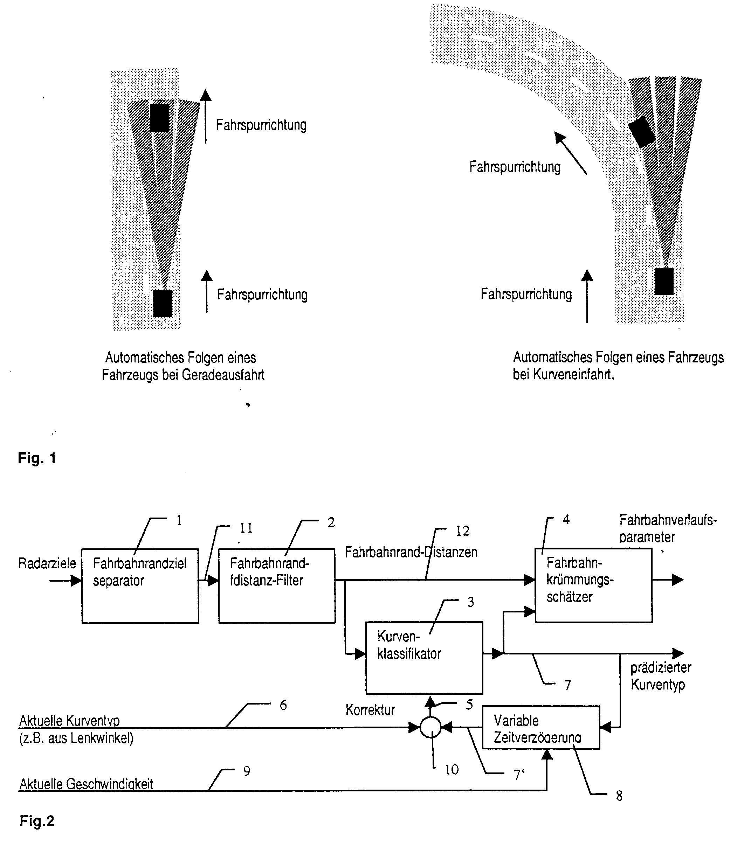

Fig. 2 zeigt das der Erfindung zugrundeliegende Verfahren zur Fahrbahnverlaufsprädiktion als Blockschaltbild. Aus mittels eines Fahrbahnrandzielseparators 1 separierten Radar-Festzielen vom Fahrbahnrand 11 werden mit einem speziellen Fahrbahnranddistanzfilter 2 die aktuellen Distanzen 12 zwischen Fahrzeug und den beobachteten Fahrbahnrändern geschätzt und einem Fahrbahnkrümmungsprädiktor 4 sowie einem prädizierenden Kurvenklassifikator 3 zugeführt. Der Kurvenklassifikator kann bei vorhandener Sensorik zur Bestimmung der aktuellen Fahrzeugrichtung laufend durch die aktuell vorliegende Kurvenklasse 6 (z.B. Gerade, Linkskurve, ... .) korrigiert werden. Da die Voraussage der vermutlichen Kurvenklasse abhängig ist von der aktuellen Geschwindigkeit 9 des Fahrzeugs, wird das zur Korrektur verwendete Klassifikationssignal 7 durch ein Laufzeitglied 8 geführt, dessen Zeitverzögerung stets an die aktuelle Geschwindigkeit 9 angepaßt ist. Das dem Kurvenklassifikator 3 zugeführte Korrektursignal 5 basiert mithin auf dem im Vergleichspunkt 10 durchgeführten Vergleich der verzögerten prädizierten Kurvenklassifikation 7` am Ausgang des Laufzeitgliedes 8 mit der aktuellen Kurvenklasse 6. Die prädizierte Kurvenklasse 7'wird verwendet, um im Fahrbahnkrümmungsprädiktor das Basismodell (z.B. Gerade, Linkskurve, Rechtskurve) zur Rekonstruktion des vorausliegenden Fahrbahnverlaufs aus den aktuellen Fahrbahnranddistanzen 12 auszuwählen. Am Ausgang des Kurvenschätzers werden die zur Beschreibung des Fahrbahnverlaufs benötigten Parameter (Krümmung, Distanz) bereitgestellt

Der in dem beschriebenen Verfahren eingeschlagene Weg zur Bestimmung des Fahrbahnverlaufs basiert auf der Erkennung der Fahrbahnränder. Zur Erkennung der Fahrbahnränder wird die Kenntnis ausgenutzt, daß die Fahrbahn in der Regel aus einem flachen, glatten Belag besteht während der Fahrbahnrand aus einer Reihe von festen Hindernissen gebildet wird (z.B. Leitplanken, Pfosten, Bewuchs, Steine, Mauern etc.) und damit eine deutlich rauhere Oberfläche darstellt. Die von der regulären Fahrbahnoberfläche zum Beobachter zurück reflektierten Signalamplituden sind daher in der Regel sehr viel geringer als die vom Fahrbahnrand reflektierten Anteile, wie dieses aus dem Vergleich der in Fig. 2 mit der Reflexion R eines Suchstrahles S am Fahrbahnrand deutlich zu erkennen ist.

Fahrbahnrandobjekte können als Punktziele auftreten (Pfosten, Schilder etc.), die sich mit bekannten Target-Tracking Verfahren (siehe z.B. S.Blackmann: "MultipleTarget Tracking with Radar Application" erkennen und verfolgen lassen. Fahrbahnrandobjekte können allerdings auch als statische Flächenziele mit linienhafter Ausdehnung auftreten, die sich nicht wie Punktziele mit den bekannten Verfahren verarbeiten lassen.

Zur Erkennung der Fahrbahnränder werden aus den gemessenen Zielen durch Vergleich der Zielgeschwindigkeiten mit der Eigengeschwindigkeit des Fahrzeugs zunächst die stehenden Ziele (Festziele) separiert. Um die für die Fahrbahnrandbestimmung unerwünschten Festziele von der Fahrbahnoberfläche zu eliminieren, wird ein Schwellwertvergleich der Festzielamplituden durchgeführt, so daß nur Festziele jenseits des Fahrbahnrandes bzw. Festziele von Hindernissen auf der Fahrbahn diese Verarbeitungsstufe passieren. Die Aufgabe des nachfolgenden Fahrbahnranddistanzfilters ist es, zur Bestimmung der Distanz zwischen Fahrzeug und Fahrbahnrand im beobachteten Winkelbereich aus den potentiellen Fahrbahnrandfestzielen diejenigen herauszufiltern, die dem Fahrbahnrand am nächsten liegen. Um Fluktuationen abzufangen, die aufgrund der veränderlichen Beschaffenheit des Straßenrandes sowie aufgrund von auf der Fahrbahn befindlichen stehenden Objekten auftreten können, sind verschiedene Maßnahmen zur Glättung der Fahrbahnranddistanzmeßwerte erforderlich.

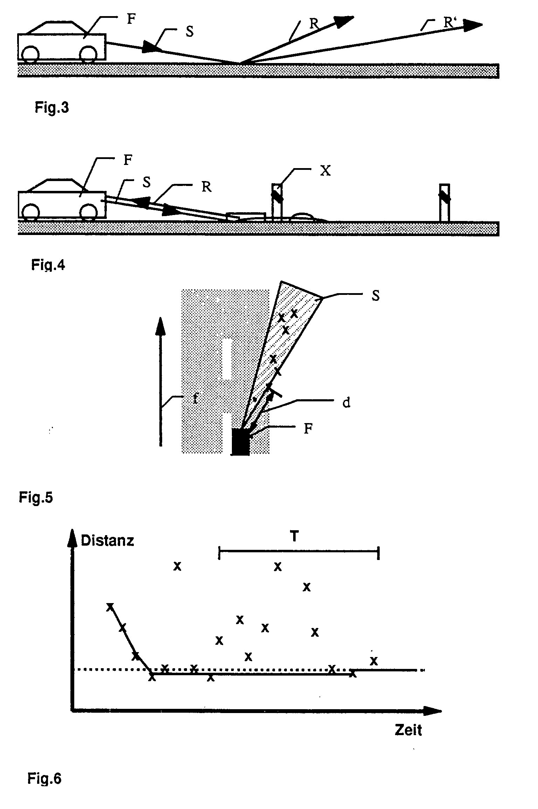

Gemäß Fig.5 werden die in jedem Winkelbereich (Suchstrahl) S gefundenen Straßenrandfestziele x eines Meßzyklus nach ihrer minimalen Distanz d zum in Fahrtrichtung f fahrenden Fahrzeug F durchsucht. Das Festziel mit minimaler Distanz d wird als Ausgangswert für die Fahrbahnranddistanz-Schätzung betrachtet. Um Fluktuationen abzufangen, die über mehrere Meßzyklen auftreten, wird ein Ordnungsfilter angewendet. Das Ordnungsfilter realisiert eine Haltefunktion über den Zeitraum des Ordnungsfensters, so daß in diesem Zeitraum auftretende Fluktuationen zu größeren Distanzen hin unterdrückt werden. Einfache, lineare Filter sind hier ungeeignet, da durch die Fluktuation erhebliche Ausreißer auftreten können, die den Mittelwert stark beeinflussen. Die Statistik ist zudem um den wahren Distanzwert stark asymmetrisch zu größeren Werten hin verteilt. Zur Realisierung wird der aktuelle Fahrbahnranddistanz-Meßwert in einen Speicher abgelegt, der die Messungen der letzten N Zyklen (N>1) hält. Die im Speicher befindlichen Meßwerte werden nach minimalster Distanz durchsucht und der Meßwert mit der geringsten Distanz wird ausgegeben.

Fig.6 zeigt Festziele x mit minimaler Distanz, die über die Zeit erfaßt werden. Mit T ist das Zeitfenster bezeichnet. Der durchgezogene Linienzug zeigt die gefilterte Minimaldistanz und die gestrichelte Linie die wahre Fahrbahnranddistanz.

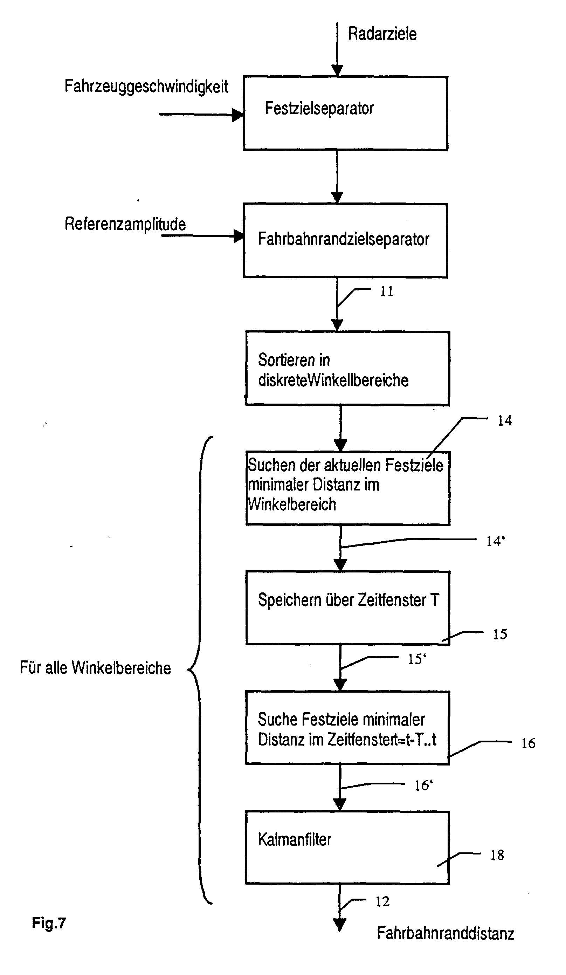

Die wie zuvor beschriebenen ordnungsgefilterten Fahrbahnranddistanzen sowie die geschätzte Varianz der Messungen werden dann einem modellbasierten Kalmanfilter zur weiteren Glättung zugeführt. Das verwendete Modell basiert auf a-priori Wissen über die Dynamik von Fahrbahnrandverläufen und verhindert abrupte Sprünge im Fahrbahnranddistanz-Signal. Fig.7 zeigt eine prinzipielle Anordnung zur Durchführung der zuvor erläuterten Schritte. Mit 11 sind Fahrbahnrandfestziele zur Zeit t=t0 bezeichnet, die einem Ordnungsfilter 14 für den Zeitpunkt t=t0 zugeführt werden. Daraus ermittelt das Ordnungsfilter 14 jeweils ein Festziel 14` kleinster Distanz, das in einem Speicher 15 gespeichert wird. Festziele 15` aus dem gespeicherten Zeitfenster t-T...t werden einem Ordnungsfilter für dieses Zeitfenster vorgegeben, das das Festziel 16` kleinster Distanz an einen Kalmanfilter 18 zur Glättung gibt. Am Ausgang des Kalmanfilters 18 stehen die aktuellen Signale 12 über die in jedem Winkelbereich geschätzte Fahrbahnranddistanz zur Weiterverarbeitung zur Verfügung. Wie Fig.7 zeigt, erhält zur adaptiven Prädiktion des Kurventyps der Klassifikator 3 am Eingang vom Kalmanfilter 18 Blöcke von zeitlich aufeinanderfolgenden Fahrbahnranddistanzen 12 aus dem für jeden Winkelbereich existierenden Fahrbahnrandfilter 2. Der Klassifikator besteht aus einer nichtlinearen Struktur (Neuronales Netz), die die Eingangsgrössen in einer oder mehreren Schichten gewichtet nichtlinear kombiniert und schließlich einen Ausgangswert bildet. Die Gewichte bestimmen das Verhalten des Klassifikators 3 und werden an das gewünschte Verhalten off-line oder on-line adaptiert.

In der Off-line Adaption werden die Gewichte vor dem eigentlichen Betrieb anhand von Beispiel-Situationen adaptiert. Die adaptierten Parameter werden während des Betriebs 'eingefroren' und nicht mehr korrigiert. Diese Betriebsart bietet sich insbesondere an für Fälle bei denen das Fahrzeug letztlich überhaupt keinen Fahrtrichtungsgeber besitzt und somit auch keine Nachkorrektur möglich ist.

Bei einer on-line Adaption besteht die Möglichkeit, bei vorhandenem Fahrzeug-Richtungssensor die Gewichte während des Betriebes zu adaptieren. Dazu wird (wie oben bereits beschrieben) aus dem aktuellen Kurventyp 6 und dem, an die aktuelle Fahrzeuggeschwindigkeit 9 angepaßt, zeitlich verzögerten prädiziertem Kurventyp 7` das Korrektursignal 5 am Vergleichspunkt 10 gebildet.

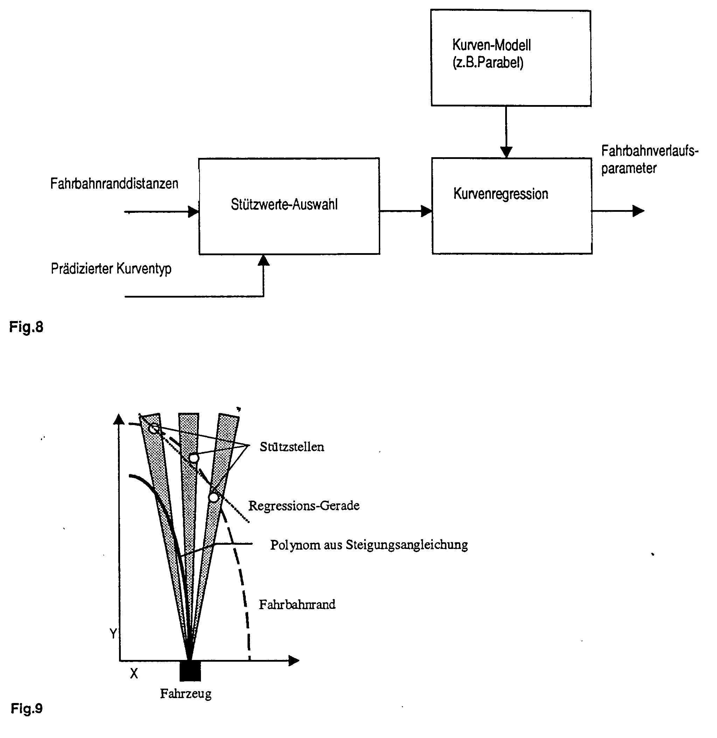

Der Fahrbahnkrümmungsschätzer 4 stellt die letzte Auswertestufe im Verfahren nach der Erfindung dar. Gemäß Fig. 8 werden auf der Basis der verfügbaren Information (prädizierter Kurventyp und aktuelle Fahrbahnranddistanzen in diskreten Winkelbereichen) die Parameter zur Beschreibung des vorausliegenden Fahrbahnverlaufs (Fahrbahnkrümmung,Distanz) am Ausgang bereitgestellt. Abhängig vom prädizierten Kurventyp wird aus den aktuellen Fahrbahnranddistanzen der Fahrbahnverlauf rekonstruiert. Die Fahrbahnkrümmungsprädiktion kann beispielsweise durch ein Polynom vorgenommen werden, das unter Berücksichtigung der Fahrbahnbreite optimal durch die Stützpunkte gelegt wird, die aus den Fahrbahnranddistanzen gewonnen werden.

Um ohne Annahmen über die Fahrbahnbreite auszukommen, kann eine Regressionsgerade durch die Fahrbahnranddistanz-Stützwerte benutzt werden, um einen Polynomparameter so zu bestimmen, daß das Polynom in der Entfernung, die der mittleren Entfernung der Fahrbahnranddistanz-Stützwerte entspricht, dieselbe Steigung wie die Regressionsgerade aufweist. Dieses Verfahren wird hier "Steigungsangleichung" genannt.

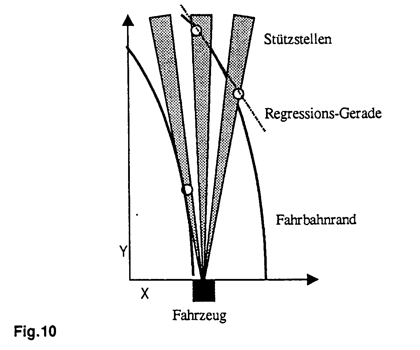

Fig. 9 zeigt beispielhaft, wie durch 3 Fahrbahnranddistanz-Stützwerte eine' Regressionsgerade gelegt wird und wie ein mittels Steigungsangleichung gewonnenes Polynom verläuft.

Fig.10 zeigt wie die aus dem Kurvenklassifikator gewonnne Information über den Kurventyp (hier Linkskurve) bei der Auswahl der Stützwerte vorteilhaft zur Geradenregression verwendet wird. Der vom linken Straßenrand stammende Stützwert verletzt die Monotonie-Bedingung für die Stützwerte einer Linkskurve und wird daher nicht weiterverarbeitet.
Der Ausnahmefall, daß sich ein Objekt auf der Fahrbahn befindet und damit ein Hindernis darstellt, liefert einen Meßwert, für den die obige Voraussetzung nicht zutrifft. Da jedoch in dem im folgenden beschriebenen Verfahren eine große Anzahl von Meßwerten benutzt wird, um den Fahrbahnverlauf zu prädizieren, ist das Verfahren robust gegenüber einzelnen Meßwerten, die von Hindernissen auf der Fahrbahn stammen.

## Patentansprüche

1. Verfahren zur Erkennung des vorausliegenden Fahrbahnverlaufs für ein Kraftfahrzeug (F), bei dem die Eigengeschwindigkeit (9) erfaßt sowie durch Radarsensorik mit starr ausgerichteten Antennen die Position und Geschwindigkeit (9) vorausbefindlicher Objekte ermittelt werden, Festziele (X) in diskreten Winkelbereichen (S) separiert werden und die Entfernungen dieser Festziele (X) als aktuelle Distanzen (16) zwischen Fahrbahnrand und Kraftfahrzeug (F) bestimmt und als Merkmale für eine Kurvenregression verwendet werden,
**dadurch gekennzeichnet,**
daß aus den Festzielen (X) in den diskreten Winkelbereichen (S) durch Schwellwertvergleich der Zielamplituden die fahrbahnrandspezifischen Ziele ermittelt werden,
daß zur Bestimmung der Distanz (16') zwischen Fahrbahnrand und Kraftfahrzeug in einem diskreten Winkelbereich (S) ein Ordnungsfilter (2) eingesetzt wird, das aus den ermittelten fahrbahnrandspezifischen Zielen des diskreten Winkelbereichs (S) mehrerer aufeinanderfolgender Meßzyklen (N) das Ziel mit der geringsten Entfernung (d) ausgefiltert und
daß die in den diskreten Winkelbereichen (S) jeweils ermittelten Ziele als Merkmale zur adaptiven Prädiktion des Kurventyps (6) mit einem Kurvenklassifikator (3) verwendet werden.

2. Verfahren nach Anspruch 1,
**dadurch gekennzeichnet,**
daß zur Glättung der Distanzen (16') zwischen Fahrbahnrand und Kraftfahrzeug (F) ein modellbasiertes Kalmanfilter (18) eingesetzt wird, dessen Modell auf a-priori-Wissen über die Dynamik von Straßenverläufen beruht.

3. Verfahren nach einem der Ansprüche 1 oder 2,
**dadurch gekennzeichnet,**
daß dem Kurvenklassifikator (3) laufend ein Korrektursignal (5) eingegeben wird, das aus dem Vergleich des aktuellen Kurventyps (6) des Fahrzeugs mit dem vom Kurvenklassifikator (3) vorausgesagtem, jeweils entsprechend der aktuellen Geschwindigkeit (9) des Kraftfahrzeugs (F) zeitverzögerten Kurventyps (7') gewonnen wird.

4. Verfahren nach einem der Ansprüch 1 bis 3,
**dadurch gekennzeichnet,**
daß der Kurvenklassifikator (3) durch ein Neuronales Netz gebildet wird.

5. Verfahren nach Anspruch 4,
**dadurch gekennzeichnet,**
daß die Gewichte des Neuronalen Netzes durch eine Off-Line-Adaption anhand von Beispiel-Situationen einmalig vorgegeben werden.

6. Verfahren nach Anspruch 4,
**dadurch gekennzeichnet,**
daß die anhand von Beispiel-Situationen vor der Inbetriebnahme vorbestimmten Gewichte des Neuronalen Netzes durch On-Line-Adaption während des Betriebes durch das Korrektursignal (5) korrigiert werden.

## Claims

1. Method for detecting the road course ahead for a motor vehicle (F), in which the road speed (9) is detected and the position and speed (9) of objects ahead are determined by means of radar sensors with antennas of fixed alignment, fixed targets (X) are separated in discrete angular regions (S) and the distances of these fixed target (X) are determined as current distances (16) between the roadside and motor vehicle (F) and are used as features for a curve regression,
characterized in that
the roadside-specific targets are determined from the fixed targets (X) in the discrete angular regions (S) by threshold comparison of the target amplitudes, in that in order to determine the distance (16') between the roadside and motor vehicle in a discrete angular region (S) use is made of an order filter (2) which filters out the target with the shortest distance (d) from the determined roadside-specific targets of a discrete angular region (S) of a plurality of consecutive measuring cycles (N), and in that the targets respectively determined in discrete angular regions (S) are used as features for adaptive prediction of the type of curve (6) using a curve classifier (3).

2. Method according to Claim 1,
characterized in that
in order to smooth the distances (16')between the roadside and motor vehicle (F) use is made of a model-based Kalman filter (18) whose model is based on a-priori knowledge of the dynamics of road courses.

3. Method according to one of Claims 1 or 2,
characterized in that
there is continuously input into the curve classifier (3) a correction signal (5) which is obtained by comparing the current type of curve (6) of the vehicle with the type of curve (7') predicted by the curve classifier (3) and time-delayed in each case in accordance with the current speed (9) of the motor vehicle (F).

4. Method according to one of Claims 1 to 3,
characterized in that
the curve classifier (3) is formed by a neural network.

5. Method according to Claim 4,
characterized in that
the weightings of the neural network are prescribed once by off-line adaptation with the aid of example situations.

6. Method according to Claim 4,
characterized in that
the weightings of the neural network which are predetermined with the aid of example situations before commissioning are corrected by the correction signal (5) by means of on-line adaptation during operation.

## Revendications

1. Procédé pour détecter la configuration de la chaussée, que va rencontrer un véhicule automobile (F), selon lequel la vitesse propre (9) est détectée et la position et la vitesse (9) d'objets situés en avant sont déterminées au moyen d'un système de détection par radar comportant une antenne orientée de façon fixe, des cibles fixes (X) sont séparées dans des plages angulaires discrètes (S) et les distances de ces cibles fixes (X) sont déterminées en tant que distances actuelles (16) entre le bord de la chaussée et le véhicule automobile (F) et sont utilisées en tant que caractéristiques pour une régression de courbe, caractérisé en ce
que les cibles spécifiques au bord de la chaussée sont déterminées à partir des cibles fixes (X) dans des plages angulaires discrètes (S) par comparaison des amplitudes des cibles à une valeur de seuil,
que pour la détermination de la distance (16') entre le bord de la chaussée et le véhicule automobile dans une plage angulaire discrète (S) on utilise un filtre d'ordre (2), qui, parmi les cibles déterminées, spécifiques au bord de la chaussée, de la plage angulaire discrète (S) de plusieurs cycles successifs de mesure (N), extrait par filtrage la cible située à la distance d la plus faible, et
que les cibles, qui sont respectivement déterminées dans les plages angulaires discrètes (S), sont utilisées en tant que caractéristiques pour la prédiction adaptative du type de courbe (6) avec un dispositif (3) de classification des courbes.

2. Procédé selon la revendication 1, caractérisé en ce
que pour le lissage des distances (16') entre le bord de la chaussée et le véhicule automobile (F), on utilise un filtre Kalman (10) basé sur un modèle et dont le modèle est basé sur une connaissance a priori concernant la dynamique de configurations de la chaussée.

3. Procédé selon l'une des revendications 1 ou 2, caractérisé en ce
qu'un signal de correction (5) est envoyé en permanence au dispositif (3) de classification de courbes, signal qui est obtenu à partir de la comparaison du type actuel de courbe (6), que parcourt le véhicule, et du type de courbe (7') prédit par le dispositif (3) de classification de courbes et retardé respectivement en fonction à la vitesse actuelle (9) du véhicule automobile (F).

4. Procédé selon l'une des revendications 1 à 3, caractérisé en ce
que le dispositif (3) de classification de courbes est formé par un réseau neuronal.

5. Procédé selon la revendication 4, caractérisé en ce
que les poids du réseau neuronal sont prédéterminés une seule fois au moyen d'une adaptation off-line sur la base de situations prises à titre d'exemples.

6. Procédé selon la revendication 4, caractérisé en ce
que les poids du réseau neuronal, qui sont prédéterminés sur la base de la situation prise à titre d'exemple avant la mise en service, sont corrigés au moyen d'une adaptation on-line pendant le fonctionnement, par le signal de correction (5).
